# EUROPÄISCHE PATENTANMELDUNG

(11) **EP 3 592 040 A1**
(43) Veröffentlichungstag der Anmeldung: **08.01.2020**
(21) Anmeldenummer: 19183969.5
(22) Anmeldetag: 02.07.2019
(51) Int. Cl.: H04W 40/24, H04W 40/02, H04L 12/751, H04L 12/727

(54) **STELLANTRIEB ZUR VERARBEITUNG VON NACHRICHTEN**

(30) Priorität: 05.07.2018 DE 102018116339
(71) Anmelder: AUMA Riester GmbH & Co. KG, 79379 Müllheim (DE)
(72) Erfinder: Stenzel, Rüdiger, 57271 Hilchenbach (DE); Ortlieb, Andreas, 79219 Staufen (DE)
(74) Vertreter: Mertzlufft-Paufler, Cornelius

(57) **Zusammenfassung**

Stellantrieb (4), mit einer Kommunikationseinheit (7) zum Aufbauen einer ersten Funkverbindung (6) zum Empfangen und Senden von Nachrichten, und mit einer Verarbeitungseinheit (9) zum Verarbeiten von Nachrichten, wobei der Stellantrieb (4) dazu eingerichtet ist, empfangene Nachrichten in der Verarbeitungseinheit (9) zu verarbeiten und über eine zweite Funkverbindung (6) weiterzuleiten, wobei der Stellantrieb (4) als Netzwerkknoten in einem Mesh-Netzwerk (1) eingebunden ist und zur Übertragung von Nachrichten zunächst ein optimaler Übertragungsweg (32) zwischen den Netzwerkknoten ermittelt wird (Fig. 11).

## Beschreibung

Die Erfindung betrifft einen Stellantrieb, mit einer Kommunikationseinheit zum Aufbauen einer ersten Funkverbindung zum Empfangen und Senden von Nachrichten, und mit einer Verarbeitungseinheit zum Verarbeiten von Nachrichten.

Stellantriebe weisen in der Regel eine Serviceschnittstelle auf, über die eine Konfiguration oder Fehlerdiagnose möglich ist. Die Serviceschnittstelle kann drahtgebunden sein oder über eine Funkverbindung erfolgen.

Im Stand der Technik ist es üblich, die Serviceschnittstelle über eine WLAN oder Bluetooth Funkverbindung zu realisieren. Der Nachteil dabei besteht in der geringen Reichweite der Funksignale. Um einen Stellantrieb zu konfigurieren oder eine Fehlerdiagnose durchzuführen muss der Techniker daher in die Funkreichweite des Stellantriebs gehen.

Aufgabe der Erfindung ist es daher einen Stellantrieb zu schaffen, dessen Serviceschnittstelle über eine größere Entfernung benutzbar ist.

Diese Aufgabe wird erfindungsgemäß durch einen Stellantrieb mit den Merkmalen des Anspruch 1 gelöst. Weiterhin wird die Aufgabe durch ein Verfahren mit den Merkmalen des Anspruch 8 gelöst.

Der erfindungsgemäße Stellantrieb ist insbesondere dazu eingerichtet, empfangene Nachrichten in der Verarbeitungseinheit zu verarbeiten und/oder über eine zweite Funkverbindung weiterzuleiten, so dass der Stellantrieb als Netzwerkknoten verwendbar, beispielsweise in einem Mesh-Netzwerk einbindbar, ist. Ein Mesh-Netzwerk (vermaschtes Netzwerk) kann beispielsweise dadurch charakterisiert werden, dass jeder Netzwerkknoten mit einem oder mehreren anderen Netzwerkknoten verbunden oder verbindbar ist. Die Informationen können somit von Netzwerkknoten zu Netzwerkknoten weitergereicht werden, bis sie ein Ziel erreichen.

Der erfindungsgemäße Stellantrieb kann demnach mit weiteren Stellantrieben ein sogenanntes Mesh-Netzwerk bilden, bei dem jeder Stellantrieb mit mindestens einem weiteren Stellantrieb über eine Funkverbindung verbunden oder verbindbar ist. Idealerweise ist jeder Stellantrieb mit allen in Reichweite befindlichen Stellantrieben verbunden.

Der Vorteil bei dem erfindungsgemäßen Stellantrieb besteht nun darin, dass eine empfangene Nachricht über eine zweite Funkverbindung weitergeleitet werden kann. Somit kann eine Nachricht über mehrere Stellantriebe bis zu ihrem eigentlichen Empfänger weitergeleitet werden. Jeder Stellantrieb im Mesh-Netzwerk erhöht somit die Reichweite der Funkverbindung.

Insbesondere in Anlagen mit sehr vielen Stellantrieben, kann so eine vollständige Erreichbarkeit von jeder Stelle innerhalb des Mesh-Netzwerkes erzielt werden.

Eine Konfiguration oder Fehlerdiagnose ist daher bequem von einem zentralen Ort möglich, wodurch der Zeitaufwand erheblich reduzierbar ist.

Eine an einem Stellantrieb empfange Nachricht kann somit je nach Inhalt oder Bestimmung in der Verarbeitungseinheit des Stellantriebs beispielsweise zur Ansteuerung eines Stellwerks verwendet oder an einen weiteren Stellantrieb weitergeleitet werden. Der Stellantrieb kann somit zur Auswertung empfangener Nachrichten darauf eingerichtet sein, ob diese zu verarbeiten oder weiterzuleiten sind.

In einer vorteilhaften Ausführung sind die Funkverbindungen als Bluetooth-Verbindungen ausgebildet. Bluetooth ist als Übertragungsprotokoll im Stand der Technik etabliert und einfach implementierbar. Es kann darüber hinaus sehr energiesparend ausgebildet sein.

Ein Netzwerkknoten ist dabei jedes Gerät, das in dem Mesh-Netzwerk eingebunden ist. Neben den Stellantrieben können auch Steuereinheiten, wie beispielsweise Computer oder Tablets, als Netzwerkknoten eingebunden sein. Dabei ist es auch möglich, dass nicht alle Netzwerkknoten zur Weiterleitung von Nachrichten ausgebildet sind. Eine Steuereinheit kann somit ein Endknoten sein.

Für die effektive Kommunikation innerhalb des Mesh-Netzwerkes ist es zweckmäßig, wenn an einem Netzwerkknoten, insbesondere einer Steuereinheit, eine Topologie des Mesh-Netzwerkes ermittelbar ist, insbesondere durch Laufzeitmessung. Die Topologie enthält die Information, welche Netzwerkknoten miteinander verbunden sind und eventuell die Entfernungen zwischen den Netzwerkknoten. Die Topologie kann von der Steuereinheit an jeden Netzwerkknoten verteilt werden, so dass die Information dezentral vorhanden ist und nicht immer neu ermittelt werden muss.

Um Energie zu sparen ist es zweckmäßig, wenn der Stellantrieb einen Ruhezustand aufweist, der über eine Aufwach-Nachricht über das Mesh-Netzwerk beendbar ist. In dem Ruhezustand kann die Kommunikationseinheit, vorzugsweise periodisch, aktiviert sein. Ein solcher Ruhezustand kann insbesondere bei autarken Stellantrieben, die keine zentrale Stromversorgung aufweisen, vorteilhaft sein. Ein solcher Stellantrieb kann beispielsweise über Solarzellen, Akkumulatoren oder eine langlebige Batterie betrieben sein.

Zum Aufbau der Funkverbindung kann der Stellantrieb wenigstens eine Antenne aufweisen. Diese kann im Stellantrieb integriert sein. Besonders zweckmäßig ist es jedoch, wenn die Antenne außerhalb eines Gehäuses des Stellantriebs angeordnet ist. Dadurch wird die abschirmende Wirkung eines Gehäuses, insbesondere wenn dieses aus Metall besteht, umgangen. Die Reichweite der Funkverbindung steigt somit signifikant. Zur weiteren Erhöhung der Reichweite kann die Antenne auch separat vom Gehäuse an einer günstigen Position angeordnet sein. Insbesondere zweckmäßig ist es jedoch, wenn die Antenne in einem Kunststoffeinsatz am Gehäuse angeordnet ist. Auf diese Weise ist die Antenne vor Umwelteinflüssen geschützt und der Kunststoff verkürzt die Reichweite nur unwesentlich.

In einer Ausführung der Erfindung weist der Stellantrieb eine, zumindest im jeweiligen Mesh-Netzwerk, eindeutige Netzwerkadresse auf. Damit ist eine Nachricht im Mesh-Netzwerk einem Stellantrieb gezielt sendbar. Eine solche Adresse kann beispielsweise eine IPv6 Adresse sein.

Prinzipiell kann der Stellantrieb jede Nachricht weiterleiten, die er empfängt. Dies kann jedoch zu erhöhtem Netzwerkverkehr führen und damit eine Verzögerung in der Kommunikation bewirken.

Insbesondere zweckmäßig ist es, wenn der Stellantrieb zwei Betriebsmodi aufweist, einen Weiterleitungsmodus und einen Empfangsmodus.

Im Weiterleitungsmodus werden Nachrichten direkt weitergeleitet. Eine Verarbeitung findet dabei nicht statt.

Im Empfangsmodus wird eine Nachricht an die Verarbeitungseinheit übergeben. Eine Weiterleitung findet dabei in der Regel nicht statt. Dadurch wird erreicht, dass der eigentliche Empfänger einer Nachricht diese nicht weiterleitet und somit kein zusätzlicher und unnötiger Netzwerkverkehr entsteht.

Zweckmäßigerweise wird der Betriebsmodus anhand der Netzwerkadresse gewählt. Prinzipiell kann ein Stellantrieb im Weiterleitungsmodus betrieben werden. Sobald der Stellantrieb anhand der Adresse der Nachricht erkennt, dass er der Empfänger ist, kann in den Empfangsmodus gewechselt werden.

In einer Ausführung der Erfindung ist in dem Weiterleitungsmodus die Verarbeitungseinheit von der Kommunikationseinheit und eventuell von der Energieversorgung getrennt. Die Verarbeitungseinheit wird demnach nur im Empfangsmodus aktiviert und mit der Kommunikationseinheit verbunden. Auf diese Weise kann zusätzlich Energie gespart werden.

Die Erfindung umfasst auch ein Verfahren zum Betreiben eines Stellantriebs als Netzwerkknoten in einem drahtlosen Mesh-Netzwerk. Insbesondere werden erfindungsgemäß über eine erste Funkverbindung empfangene Nachrichten in dem Stellantrieb verarbeitet oder über eine zweite Funkverbindung an wenigstens einen weiteren Netzwerkknoten weitergeleitet.

Auf diese Weise kann jeder Stellantrieb in dem Netzwerk entweder als Empfänger einer Nachricht oder als Relay dienen, um die Reichweite einer Funkverbindung zu erhöhen.

Somit können durch Weiterleiten von Nachrichten auch Stellantriebe erreicht werden, die, beispielsweise aufgrund ihrer Entfernung, keine direkte Funkverbindung erlauben.

Dabei kann es besonders zweckmäßig sein, wenn von einem Netzwerkknoten, insbesondere einem Steuergerät, eine Topologie des Mesh-Netzwerks ermittelt wird, insbesondere durch Laufzeitmessung von Nachrichten. Die Topologie enthält schließlich die Information, welche Netzwerkknoten untereinander verbunden sind.

Die Topologie kann insbesondere dadurch bestimmt werden, dass Laufzeiten für die Übertragung von Nachrichten und/oder Übertragungsreichweiten zwischen einzelnen Netzwerkknoten automatisch oder auf Anfrage ermittelt werden. Die Topologie kann beispielsweise periodisch oder beim Hinzufügen eines Netzwerkknotens ermittelt werden.

Die Topologie des Netzwerkes ist insbesondere für das Routen von Nachrichten wichtig. Eine Nachricht an einen bestimmten Netzwerkknoten kann beispielsweise als Broadcast an alle erreichbaren Netzwerknoten erfolgen. Alle Netzwerknoten, die nicht Empfänger sind, leiten diese dann wieder an alle ihrerseits erreichbaren Netzwerkknoten weiter. Auf diese Weise wird jede Nachricht vielfach unnötig und redundant im Mesh-Netzwerk verteilt.

In einer besonders vorteilhaften Ausführung wird daher vor dem Übertragen von Nachrichten zwischen zwei Netzwerkknoten zunächst jeweils ein optimaler Übermittlungsweg ermittelt, insbesondere aus den ermittelten Laufzeiten und/oder Übertragungsreichweiten. Oder anders ausgedrückt kann der optimale Übermittlungsweg aus der Topologie ermittelt werden.

Dazu wird beispielsweise in der Topologie zunächst der Empfänger gesucht und dieser Rückwärts mit dem Absender der Nachricht verbunden. Auf diese Weise kann ein optimaler Weg für die Nachricht ermittelt werden. Die Nachricht kann dann gezielt an den Netzwerkknoten gesendet werden, der auf dem Weg auf den Absender folgt. Da dieser nicht der Empfänger ist, leitet er die Nachricht weiter, wobei hier erneut zunächst der optimale Weg auf dieselbe Weise ermittelt wird. Somit kann eine Nachricht ohne unnötigen Netzwerkverkehr schnell und gezielt übermittelt werden.

Alternativ kann der optimale Übermittlungsweg, insbesondere alle Zwischenstationen, mit der Nachricht übermittelt werden, so dass jeder Netzwerkknoten den nächsten Empfänger aus dem empfangenen Übermittlungsweg entnehmen kann. Auf diese Weise ist eine sehr schnelle und direkte Weiterleitung der Nachricht möglich.

Die Erfindung ist nachfolgend anhand von Ausführungsbeispielen mit Bezug auf die beiliegenden Zeichnungen näher erläutert.

Es zeigt:
- Fig. 1:: ein Mesh-Netzwerk mit mehreren erfindungsgemäßen Stellantrieben und zwei Steuereinheiten im Betrieb,
- Fig. 2:: ein Mesh-Netzwerk mit mehreren erfindungsgemäßen Stellantrieben und zwei Steuereinheiten im Erfassen der Topologie,
- Fig. 3:: ein Ablaufdiagramm zum Erfassen der Topologie von einer Steuereinheit,
- Fig. 4:: ein Ablaufdiagramm zum Erfassen der Topologie von einem Stellantrieb,
- Fig. 5:: ein Ablaufdiagramm zum Senden einer Ping-Nachricht,
- Fig. 6:: ein Ablaufdiagramm zum Empfangen einer Ping-Nachricht,
- Fig. 7:: ein Ablaufdiagramm zum Ermitteln des optimalen Übertragungsweges von einer Steuereinheit,
- Fig. 8:: ein Ablaufdiagramm zum Ermitteln des optimalen Übertragungsweges von einem Stellantrieb,
- Fig. 9:: ein Ablaufdiagramm zur Routing-Einrichtung,
- Fig. 10:: ein Ablaufdiagramm zur Durchführung des Routing und
- Fig. 11:: ein Mesh-Netzwerk mit einem optimalen Übermittlungsweg.

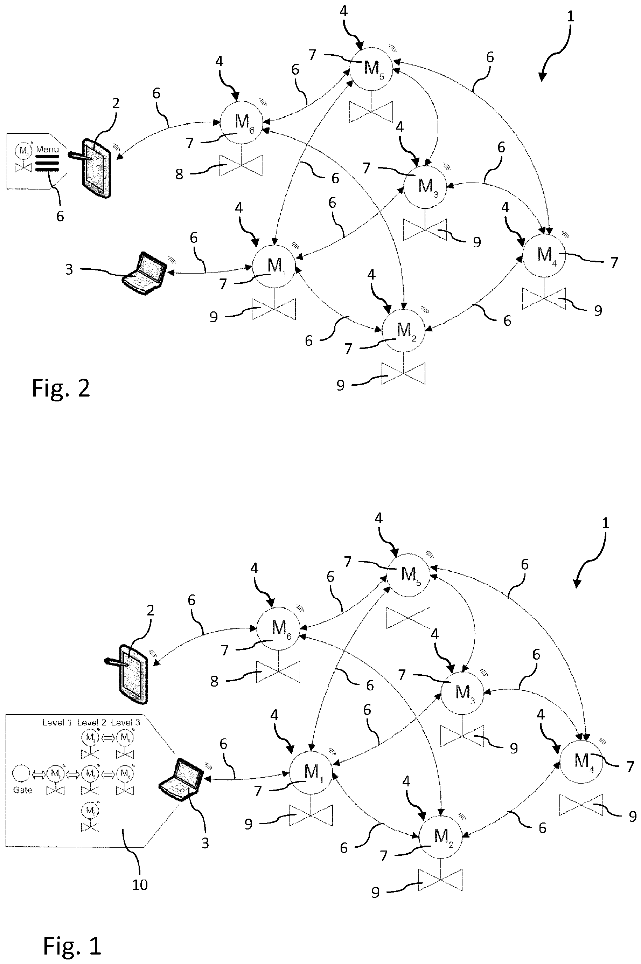

Die Fig. 1 zeigt ein Mesh-Netzwerk 1 mit einem Tablet 2 und einem Computer 3 als Steuereinheiten und sechs erfindungsgemäßen Stellantrieben 4 M1 bis M6.

Tablet 2, Computer 3 und Stellantriebe 4 bilden Netzwercknoten innerhalb des Mesh-Netzwerkes 1. Das Mesh-Netzwerk 1 basiert auf Funkverbindungen 6 zwischen den einzelnen Netzwerkknoten.

Wobei Tablet 2 und Computer 3 Endknoten sind, die jeweils nur mit einem Stellantrieb 4 über jeweils eine Funkverbindung 6 verbunden sind. Die Stellantriebe 4 sind hingegen jeweils mit mehreren Stellantrieben 4 über jeweils eine Funkverbindung 6 verbunden.

Der Stellantrieb 4 besitzt eine Kommunikationseinheit 7 mit wenigstens einer Antenne 8 zum Aufbau der Funkverbindungen 6. Die Antenne 8 ist vorzugsweise außerhalb eines Gehäuses des Stellantriebes 4 angeordnet, damit die Funkverbindung 6 nicht durch die eventuelle abschirmende Eigenschaft des Gehäuses geschwächt oder beeinträchtigt wird.

Der Stellantrieb besitzt weiter eine Verarbeitungseinheit 9, die mit der Kommunikationseinheit 7 verbunden ist. Zur Verarbeitungseinheit 9 kann ein Stellwerk gehören, das über einen Elektromotor angetrieben ist.

Im gezeigten Beispiel wird von dem Mesh-Netzwerk 1 regelmäßig oder nach Aufforderung, beispielsweise beim Hinzufügen oder Entfernen von Netzwerkknoten, eine Topologie des Mesh-Netzwerks 1 bestimmt. Dies erfolgt im Beispiel am Computer 3, der als Steuereinheit mit dem Mesh-Netzwerk 1 verbunden ist.

Die Topologie 10 enthält eine Liste aller im Mesh-Netzwerk 1 verfügbaren Netzwerkknoten und deren Verbindungen untereinander. Darüber hinaus können auch weitere Informationen enthalten sein, wie beispielsweise Entfernungen zwischen den Netzwerkknoten oder Signalstärken. Die Topologie 10 kann auch eine visuelle Darstellung des Mesh-Netzwerk 1 umfassen, so dass eine Anlage einfach an einer Steuereinheit oder sogar an jedem Stellantrieb 4 vollständig erfassbar und überschaubar ist.

Zur Konfiguration oder Fehlerdiagnose eines Stellantriebs 4 kann beispielsweise aus dieser Visualisierung oder aus der Topologie 10 ein Stellantrieb 4 ausgewählt werden. Dies kann beispielsweise grafisch erfolgen.

Die Fig. 2 zeigt ein Tablet 2, das mit dem Mesh-Netzwerk 1 als weitere Steuereinheit verbunden ist. Hier ist am Tablet 2 exemplarisch der Stellantrieb M4 ausgewählt. Selbstverständlich kann dies auch am Computer 3 durchgeführt werden.

Nach dem Auswählen eines Stellantriebs 4 öffnet sich ein Menu 11 das Funktionen des ausgewählten Stellantriebs M4 angezeigt, über das etwa Konfigurationseinstellungen oder eine Fehlerdiagnose durchführbar sind.

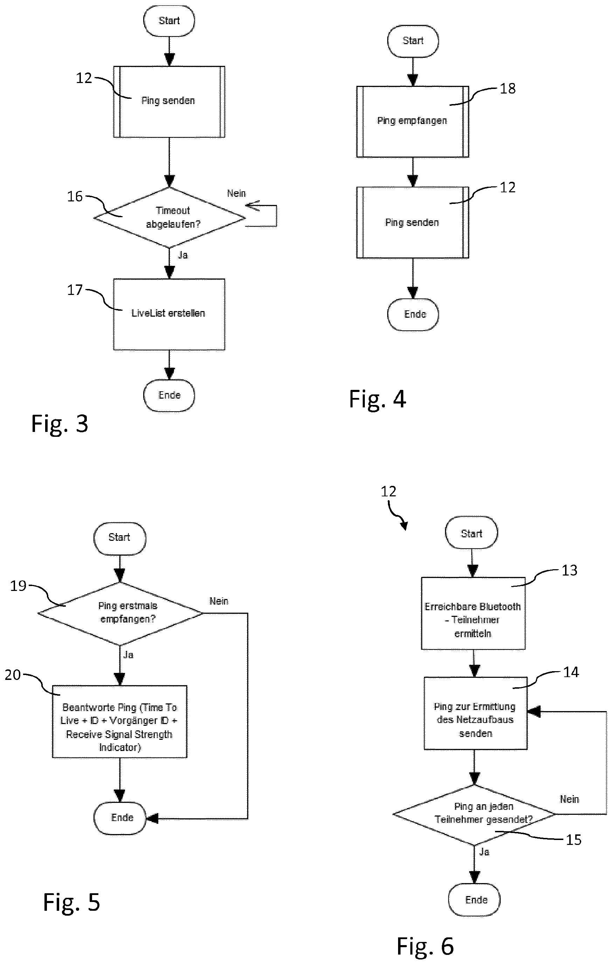

Die Fig. 3 beschreibt in einem Ablaufdiagramm die Erstellung der Topologie 10 von einer Steuereinheit aus. Dazu sendet die Steuereinheit eine Ping-Nachricht 12 in das Mesh-Netzwerk 1.

Das Senden der Ping-Nachricht 12 erfolgt gemäß dem Ablaufdiagramm der Fig. 6. Hier wird zunächst ermittelt 13, welche Netzwerkknoten über eine Funkverbindung 6, im Beispiel Bluetooth, erreichbar sind. Dies ist anhand des Bluetooth Protokolls einfach durchführbar. Es wird dann eine Ping-Nachricht an den ersten der erreichbaren Netzwerkknoten gesendet 14. Es wird dann geprüft, ob an alle erreichbaren Netzwerknoten gesendet wurde 15. Falls nicht, wird mit dem nächsten erreichbaren Netzwerkknoten fortgefahren. Falls ja, endet das Senden.

Im Ablaufdiagramm der Fig. 3 wird nach dem Senden der Ping-Nachrichten eine gewisse Wartezeit gewartet 16. Danach kann die Topologie 10 des Mesh-Netzwerk 1 erstellt werden 17.

Ein Netzwerkknoten im Mesh-Netzwerk 1 reagiert auf die Ping-Nachricht gemäß dem Ablaufdiagramm der Fig. 4. Zunächst wird eine Ping-Nachricht empfangen 18. Dies erfolgt gemäß dem Ablaufdiagramm in Fig. 5.

Hier wird zunächst geprüft 19, ob der Netzwerkknoten zum ersten Mal eine Ping-Nachricht empfängt. Da jeder Netzwercknoten prinzipiell mit mehreren anderen Netzwerkknoten über Funkverbindungen 6 verbunden ist, wird nur einmal auf eine Ping-Nachricht reagiert.

Falls ja, wird eine Antwort gesendet 20, die wenigstens eine eindeutige Adresse (ID) des Netzwerkknotens, eine Antwortzeit (TTL), die ID des Vorgängers, also des Netzwerkknoten, von dem der Ping empfangen wurde, und eine Empfangssignalstärke (RSSI) enthält. Diese Antwort landet schließlich bei der Steuereinheit, die daraus die Topologie 10 des Mesh-Netzwerks 1 erstellt.

Anschließend wird von diesem Netzwerkknoten eine Ping-Nachricht gesendet 12, gemäß dem Ablaufdiagramm der Fig. 6.

Auf diese Weise wird sichergestellt, dass jeder Netzwerkknoten im Mesh-Netzwerk 1 mindestens eine Ping-Nachricht erhält und darauf antwortet. Die Steuereinheit erhält somit von jedem Netzwerkknoten eine Antwort, so dass eine vollständige Topologie 10 erstellt werden kann. Aufgrund der in der Antwort übermittelten Angaben jedes Netzwerkknotens zur Signalstärke und eventuell zur Signallaufzeit, kann die Topologie neben einer Bestandsliste auch eine räumliche Darstellung der Netzwerkknoten umfassen.

Um eine Nachricht innerhalb des Mesh-Netzwerk 1 gezielt an einen Netzwerkknoten zu senden wird erfindungsgemäß vor jedem Sendevorgang der optimale Übertragungsweg ermittelt. Dieser optimale Übertragungsweg kann beispielsweise durch die wenigsten Zwischenstationen, den kürzesten Signalweg, die insgesamt geringste Sendeleistung oder eine beliebige Kombination aus diesen oder anderen Merkmalen charakterisiert sein.

Im Beispiel ist der optimale Übertragungsweg durch die wenigsten Zwischenstationen charakterisiert, wobei hier ein kürzerer Signalweg priorisiert ist.

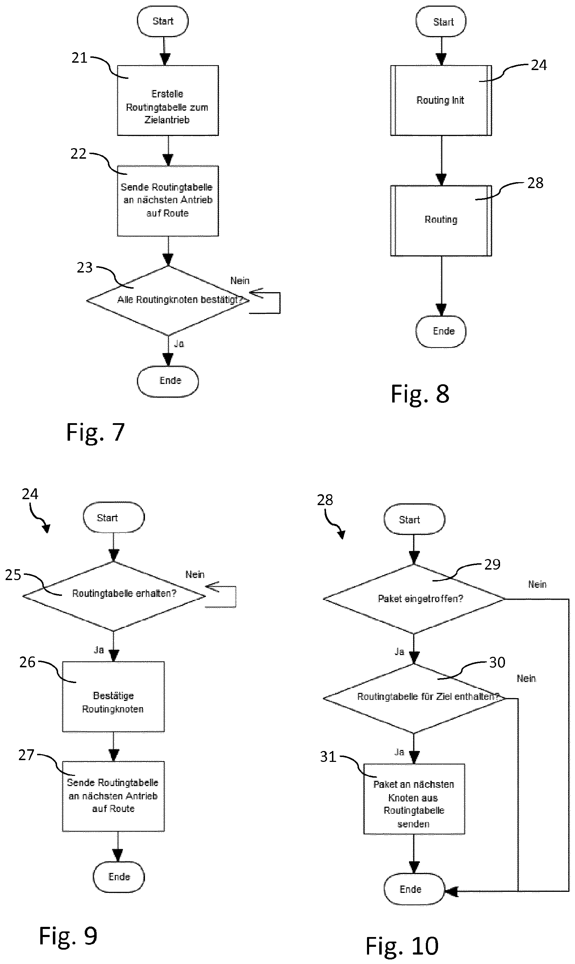

Die Übertragung einer Nachricht erfolgt gemäß dem Ablaufdiagramm der Fig. 7. Zunächst wird anhand der im Mesh-Netzwerk 1 verfügbaren Topologie 10 eine Routingtabelle erstellt, die dem optimalen Übertragungsweg enthält. Darin sind alle Netzwerkknoten als Zwischenstationen in der Reihenfolge gelistet.

Diese Routingtabelle wird an den ersten Netzwerkknoten der Routingtabelle gesendet 22. Schließlich wird geprüft, ob alle Netzwerkknoten eine Bestätigung gesendet haben 23. Falls dies nicht der Fall ist, kann einer der Netzwerkknoten auf dem Übertragungsweg keine Nachrichten weiterleiten. Es kann dann ein neuer Übertragungsweg gefunden und geprüft werden.

Der Netzwerkknoten, der eine Routingtabelle empfängt, befolgt die Schritte gemäß Ablaufdiagramm der Fig. 8. Zunächst wird das Routing initialisiert 24, gemäß Ablaufdiagramm der Fig. 9.

Dabei wird geprüft, ob eine gültige Routingtabelle erhalten wurde 25. Falls ja, wird eine Bestätigung an den Absender-Netzwerkknoten gesendet 26 und anschließend die Routingtabelle an den nächsten Netzwerknoten auf der Routingtabelle gesendet 27.

Auf diese Weise erhalten alle Netzwerkknoten auf dem optimalen Übertragungsweg die Routingtabelle und bestätigen an den Initiator, dass sie diese erhalten haben. Auf diese Weise weiß der Absender der Nachricht, dass der Übertragungsweg vollständig ist und die Nachricht nicht unterwegs verloren gehen kann.

Die Nachricht kann dann gesendet 28 werden, gemäß Ablaufdiagramm der Fig. 10. Hier wird zunächst geprüft 29, ob eine Nachricht eingetroffen ist. Es wird weiter geprüft 30, ob die Routingtabelle für das Ziel in der Nachricht enthalten ist.

Falls beides vorhanden ist, wird die Nachricht an den nächsten in der Routingtabelle gelisteten Netzwerkknoten weitergeleitet.

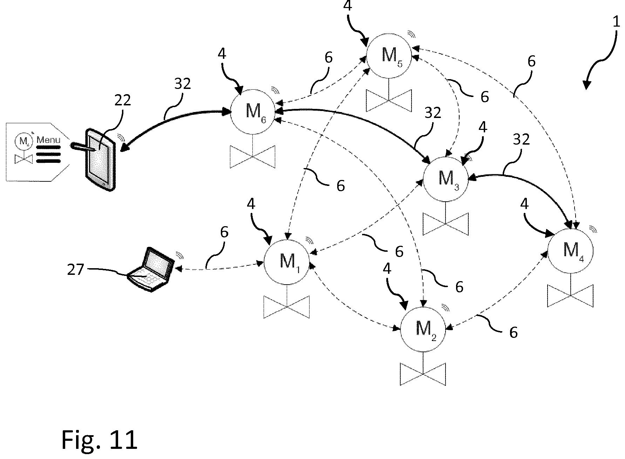

Die Fig. 11 zeigt beispielhaft eine solche Übertragung einer Nachricht auf einem optimalen Übertragungsweg 32. Im Beispiel soll vom Tablet 2 eine Konfigurationsnachricht an den Stellantrieb 4 M4 gesendet werden. Der optimale Übertragungsweg wird anhand der Topologie 10 und den genannten Kriterien festgelegt und enthält in dieser Reihenfolge die Stellantriebe M6, M3 und M4. Dabei sind nur vorhandene und mögliche Funkverbindungen 6, gestrichelt gezeichnet, berücksichtigt.

Die Übertragungswege M6, M2, M4 und M6, M5, M4 enthalten zwar jeweils auch nur zwei Zwischenstationen, jedoch sind hier die Entfernungen größer, so dass der oben genannte Übertragungsweg priorisiert ist.

### Bezugszeichenliste

- 1: Mesh-Netzwerk
- 2: Tablet
- 3: Computer
- 4: Stellantrieb
- 6: Funkverbindung
- 7: Kommunikationseinheit
- 8: Antenne
- 9: Verarbeitungseinheit
- 10: Topologie
- 11: Menu
- 12: sende Ping-Nachricht
- 13: erreichbare Teilnehmer ermitteln
- 14: Ping-Nachricht senden
- 15: Ping-Nachricht an alle gesendet?
- 16: Warten
- 17: Topologie erstellen
- 18: Ping-Nachricht empfangen
- 19: Ping-Nachricht erstmalig empfangen?
- 20: Antwort senden
- 21: Routingtabelle erstellen
- 22: Routingtabelle senden
- 23: Alle Zwischenstationen bestätigt?
- 24: Routing initialisieren
- 25: Routingtabelle erhalten?
- 26: Antwort als Bestätigung senden
- 27: Routingtabelle weiterleiten
- 28: Routing
- 29: Nachricht eingetroffen?
- 30: Routingtabelle enthalten?
- 31: Nachricht weiterleiten
- 32: optimaler Übertragungsweg

## Patentansprüche

1. Stellantrieb (4), mit einer Kommunikationseinheit (7) zum Aufbauen einer ersten Funkverbindung (6) zum Empfangen und Senden von Nachrichten, und mit einer Verarbeitungseinheit (9) zum Verarbeiten von Nachrichten, **dadurch gekennzeichnet**, der Stellantrieb (4) dazu eingerichtet ist, empfangene Nachrichten in der Verarbeitungseinheit (9) zu verarbeiten und/oder über eine zweite Funkverbindung (6) weiterzuleiten, so dass der Stellantrieb (4) als Netzwerkknoten verwendbar, beispielsweise in einem Mesh-Netzwerk (1) einbindbar, ist.

2. Stellantrieb (4) nach Anspruch 1, **dadurch gekennzeichnet, dass** die Funkverbindungen (6) als Bluetooth-Verbindungen ausgebildet sind.

3. Stellantrieb (4) nach Anspruch 1 oder 2, **dadurch gekennzeichnet, dass** an einem Netzwerkknoten, insbesondere einer Steuereinheit (2,3), eine Topologie (10) des Mesh-Netzwerkes (1) ermittelbar ist, insbesondere durch Laufzeitmessung.

4. Stellantrieb (4) nach einem der Ansprüche 1 bis 3, **dadurch gekennzeichnet**, der Stellantrieb einen Ruhezustand aufweist, der über eine Aufwach-Nachricht über das Mesh-Netzwerk beendbar ist.

5. Stellantrieb (4) nach einem der Ansprüche 1 bis 4, **dadurch gekennzeichnet, dass** der Stellantrieb wenigstens eine Antenne (8) aufweist, wobei die Antenne (8) insbesondere außerhalb eines Gehäuses des Stellantriebs (4) angeordnet ist, insbesondere in einem Kunststoffeinsatz am Gehäuse.

6. Stellantrieb (4) nach einem der Ansprüche 1 bis 5, **dadurch gekennzeichnet, dass** der Stellantrieb (4) eine, zumindest im jeweiligen Mesh-Netzwerk (1), eindeutige Netzwerkadresse (ID) aufweist.

7. Stellantrieb (4) nach einem der Ansprüche 1 bis 6, **dadurch gekennzeichnet, dass** der Stellantrieb (4) zwei Betriebsmodi aufweist, einen Weiterleitungsmodus, in dem empfangene Nachrichten weitergeleitet werden, und einen Empfangsmodus, in dem empfangene Nachrichten in der Verarbeitungseinheit (9) verarbeitet werden.

8. Stellantrieb (4) nach Anspruch 7, **dadurch gekennzeichnet, dass** in dem Weiterleitungsmodus die Verarbeitungseinheit (9) von der Kommunikationseinheit (7) getrennt ist.

9. Verfahren zum Betreiben eines Stellantriebs (4), insbesondere nach einem der Ansprüche 1 bis 8, als Netzwerkknoten in einem drahtlosen Mesh-Netzwerk (1), **dadurch gekennzeichnet, dass** über eine erste Funkverbindung (6) empfangene Nachrichten in dem Stellantrieb (4) verarbeitet werden oder über eine zweite Funkverbindung (6) an wenigstens einen weiteren Netzwerkknoten weitergeleitet werden.

10. Verfahren nach Anspruch 9, **dadurch gekennzeichnet, dass** von einem Netzwerkknoten, insbesondere einer Steuereinheit (2,3), eine Topologie (10) des Mesh-Netzwerks (1) ermittelt wird, insbesondere durch Laufzeitmessung von Nachrichten.

11. Verfahren nach Anspruch 9 oder 10, **dadurch gekennzeichnet, dass** Laufzeiten für die Übertragung von Nachrichten und/oder Übertragungsreichweiten zwischen einzelnen Netzwerkknoten automatisch oder auf Anfrage ermittelt werden.

12. Verfahren nach einem der Ansprüche 9 bis 11, **dadurch gekennzeichnet, dass** zum Übertragen von Nachrichten zwischen zwei Netzwerkknoten zunächst jeweils ein optimaler Übermittlungsweg (32) ermittelt wird, insbesondere aus den ermittelten Laufzeiten und/oder Übertragungsreichweiten.
